(19) Europäisches Patentamt
European Patent Office
Office européen des brevets

(11) Publication number: 0 368 281
A1

# (12) EUROPEAN PATENT APPLICATION

(21) Application number: 89120699.7

(22) Date of filing: 08.11.89

(51) Int. Cl.[5]: C08L 77/00, C08L 67/02, //(C08L77/00,23:00,67:02), (C08L67/02,23:00,77:00)

(30) Priority: 08.11.88 JP 281801/88
06.03.89 JP 53262/89

(43) Date of publication of application:
16.05.90 Bulletin 90/20

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: Hashimoto, Mikio Mitsui Petrochemical Ind., Ltd.
1-2, Waki 6-chome Wakicho
Kuga-gun Yamaguchi(JP)
Inventor: Akana, Yoshinori Mitsui Petrochemical Ind., Ltd.
1-2, Waki 6-chome Wakicho
Kuga-gun Yamaguchi(JP)
Inventor: Hori, Hiroyuki Mitsui Petrochemical Ind., Ltd.
1-2, Waki 6-chome Wakicho
Kuga-gun Yamaguchi(JP)

(74) Representative: Hansen, Bernd, Dr.rer.nat.
Hoffmann, Eitle & Partner Patentanwälte
Arabellastrasse 4 Postfach 81 04 20
D-8000 München 81(DE)

## (54) Polyamide resin compositions.

(57) There is disclosed a polyamide resin composition which comprises:

(A) an aromatic polyamide resin comprising (a) a dicarboxylic acid component which comprises an aromatic dicarboxylic acid component and (b) a diamine component comprising at least one of an aliphatic diamine component and an alicyclic diamine component;

(B) an olefin copolymer in amounts of 0.5-50 parts by weight in relation to 100 parts by weight of the aromatic polyamide resin, the olefin copolymer comprising an α-olefin component and an α,β-unsaturated carboxylic acid glycidyl ester component in amounts of 1-30 % by weight based on the copolymer.

The polyamide resin composition may further contain a polyarylate in amounts of 10-200 parts by weight in relation to 100 parts by weight of the polyamide resins wherein the polyarylate is polymerization products of bisphenols and aromatic dicarboxylic acids or their derivatives.

EP 0 368 281 A1

# POLYAMIDE RESIN COMPOSITIONS

This invention relates to polyamide resin compositions which are excellent in heat resistance, mechanical properties including impact strength, resistance to chemicals and water as well as in fluidity and moldability.

Aliphatic polyamide resins have heretofore found expanded applications in synthetic fibers. They have also mechanical strength, rigidity, heat resistance and wear resistance higher than the other general use thermoplastic resins such as polyolefins.

However, the aliphatic polyamide resins are rather unsatiasfactory or insufficient in thermal properties such as melting points, glass transition temperatures or thermal deflection temperatures, mechanical properties such as rigidity, tensile strength, flexural strength, pigment volume concentrations or wear resistance, or physicochemical properties such as resistance to water, boiling water, brine or chemicals, for use in fields where higher performane is required, Further, the aliphatic polyamide resins are rather water absorptive, and molded articles thereof are readily deformed when they have absorbed water.

Therefore, a number of polyamide resin compositions have hitherto been proposed rather in vain to realize high performance since there are essential limitings derived from the fact that the base resins in the compositions are aliphatic polyamide resins.

By way of example, for the purpose of improving heat resistance and in addition water absorptiveness, there have been proposed aliphatic polyamide resin compositions which contain polyarylates therein, as disclosed in Japanese Patent Laid-open No. 52-98765. The compositions have improved thermal properties, and for example, they have high thermal deflection temperatures of 140-150 °C without icorporating fillers thereinto, but also they have high resistance to chemicals and high impact strength comparable to general engineering plastics. However, the compositions are greatly reduced in impact strength when there are formed notches thereon.

Meanwhile, as the use of engineering plastics have been diversified recently, there has been a strong demand for engineering plastics of higher performance. There are already known a variety of engineering plastics such as polytetrafluoroethylene, poly-p-phenyleneterephthalamide, polyphenylene sulfide, polyacetal or polyimide resins as condensates of 4,4′-diaminodiphenyl ether and pyromellitic anhydride. It is true that among the above resins, polytetrafluoroethylene, poly-p-phenyleneterephthalamide and polyimdes are superior in thermal and mechanical properties, but they have a defect that they can not be melt-molded, while polyphenylene sulfide and polyacetal resins are still unsatisfactory in thermal and mechanical properties such as impact strengh or wear resistance.

Under these circumstances, aromatic polyamide resins composed of aromatic dicarboxylic acid such as terephthalic acid and aliphatic diamines such as 1,6-diaminohexane, as described in Japanese Patent Laid-open No. 59-53536, seem more promising as high performance engineering plastics than the aliphatic polyamide resins. However, the aromatic polyamide resins have much higher melting points but also smaller fluidity so that it is necessary to heat the resins nearly to their thermal decomposition temperatures to melt-mold the resins, and therefore it has been difficult to produce articles of complicated shapes by melt molding, in particular, by injection-molding of the resins or their compositions.

Therefore, aromatic polyamide resin compositions have been proposed which contain polyamide resins mainly composed of aromatic dicarboxylic acid components and aliphatic diamine components, and α-olefin elastomers having unsaturated carboxylic acids grafted thereon, as described in Japanese Patent Laid-Open No. 60-144362. The α-olefin elastomer may be exemplified by ethylene-propylene copolymers having maleic alhydride grafted thereonto having a low crystallinity. Those aromatic polyamide resin compositions have excellent heat resistance, but they have been found still insufficient in mechanical properties, in particular, impact strength.

It is, therefore, an object of the invention to provide aromatic polyamide resin compositions which are of excellent thermal properties, mechanical properties, moldability and the other physicochemical properties.

In accordance with the invention, there is provided a polyamide resin composition which comprises:

(A) an aromatic polyamide resin comprising (a) a dicarboxylic acid component which comprises an aromatic dicarboxylic acid component and (b) a diamine component comprising at least one of an aliphatic diamine component and an alicyclic diamine component;

(B) an olefin copolymer in amounts of 0.5-50 parts by weight in relation to 100 parts by weight of the aromatic polyamide resin, the olefin copolymer comprising an α-olefin component and an α,β- unsaturated carboxylic acid glycidyl ester component in amounts of 1-30 % by weight based on the copolymer.

The polyamide resin composition of the invention comprises (A) an aromatic polyamide resin and (B) an olefin copolymer.

The aromatic polyamide resin used contains aromatic dicarboxylic acid componenta and diamine components. The aromatic dicarboxylic acid component may be terephthalic acid component as a first aromatic dicarboxylic acid component or the others as a second aromatic dicarboxylic acid component or a mixture of these. There may be mentioned as such second aromatic dicarboxylic acid components, for example, isophthalic acid, phthalic acid, 2-methylterephthalic acid or naphthalene dicarboxylic acid components, among which are preferred isophthalic acid or naphthalene dicarboxylic acid components, and the former are most preferred.

However, the dicarboxylic acid component us preferably composed of terephthalic acid components in amounts of 40-100 mol % and at least one of the second aromatic dicarboxylic acid components and aliphatic dicarboxylic acid components in amounts of 60-0 mol %. Isophthalic acid or naphthalene dicarboxylic acid components are especially preferred as the second aromatic dicarboxylic acid components, and isophthalic acid components are most preferred.

The aliphatic dicarboxylic acid components used are preferably of 4-20 carbons, more preferably of 6-12 carbons, and include, for example, succinic acid, adipic acid, azelaic acid, sebacic acid, decane dicarboxylic acid, undecane dicarboxylic acid or dodecane dicarboxylic acid components, among which are in particular preferred adipic acid components.

More preferably, the aromatic polyamide resin is composed of (a) an aromatic dicarboxylic acid component which is composed of terephthalic acid component in amounts of 60-100 mol % and a second aromatic dicarboxylic acid in amounts of 0-40 mol % and (b) an aliphatic diamine component.

The dicarboxylic acid component may be used together with tribasic or more polybasic aromatic carboxylic acid components in small amounts, usually in amounts of not more than 10 mol % based on the total of di- and tri- or more polybasic carboxylic acid components. The tribasic or more polybasic aromatic carboxylic acid components usable may be exemplified by trimellitic acid or pyromellitic acid components.

The diamine component used may be an aliphatic diamine or an alicyclic diamine component, or a mixture of these. The aliphatic diamine components may be linear or branched. Preferred diamines are linear or branched alkylenediamines of 4-25 carbons, most preferably of 6-18 carbons. Thus, preferred linear alkylenediamine components may be exemplified by 1,6-diaminohexane, 1,7-diaminoheptane, 1,8-diaminooctane, 1,9-diaminononane, 1,10-diaminodecane, 1,11-diaminoundecane or 1,12-diaminododecane components. Preferred branched alkylenediamine component may be exemplified by 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diamino-2,5-dimethylhexane, 1,6-diamino-2,4-dimethylhexane, 1,6-diamino-3,3-dimethylhexane, 1,6-diamino-2,2-dimethylhexane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane or 1,9-diamino-5-methylnonane components.

Among the diamines as above, the linear alkylenediamine components are preferred, and in particular, 1,6- diaminohexane, 1,8-diaminooctane, 1,10-diaminodecane or 1,12-diaminododecane components, or a mixture of two or more of these are preferred.

The alicyclic diamine components used, in turn, are usually of 6-25 carbons, and contain at least one alicyclic ring. The components may be exemplified by 1,3-diaminocyclohexane, 1,4-diaminocyclohexane, 1,3-bis(aminomethyl)cyclohexane, 1,4-bis(aminomethyl)cyclohexane, isophoronediamine, piperazine, 2,5-dimethylpiperazine, bis(4-aminocyclohexyl)methane, bis(4-aminocyclohexyl)propane, 4,4′-diamino-3,3′-dimethyldicyclohexylmethane, 4,4′-diamino-3,3′-dimethyldicyclohexylpropane, 4,4′-diamino-3,3′-dimethyl-5,5′-dimethyldicyclohexylmethane, 4,4′-diamino-3,3′-dimethyl-5,5′-dimethyldicyclohexylpropane, α,α′-bis(4-aminocyclohexyl)-p-diisopropylbenzene, α,α′-bis(4-aminocyclohexyl)-m-diisopropylbenzene, α,α′-bis(4-aminocyclohexyl)-1,4-diisopropylcyclohexane or α,α′-bis (4-aminocyclohexyl)-1,3-diisopropylcyclohexane component.

Among the alicyclic diamine components as above mentioned are preferred bis(aminomethyl)-cyclohexanes, bis(4-aminocyclohexyl)methane or 4,4′-diamino-3,3′-dimethyldicyclohexylmethane, and bis(4-aminocyclohexyl)methane, 1,3-bis(aminocyclohexyl)methane or 1,3-bis(aminomethyl)cyclohexane are most preferred.

In accordance with the invention, when the dicarboxylic acid component is mainly composed of terephthalic acid component, and more specifically when the dicarboxylic acid component contains the terephthalic acid component preferably in amounts of not less than 60 mol %, the diamine component is preferably composed of such aliphatic diamine components as described hereinbefore. Further, it is

preferred that the amount of the terephthalic acid component in the dicarboxylic acid components be defined by the number of carbons in the aliphatic diamine components.

More specifically, when the aliphatic diamine component is composed of carbon chains of 4-11 carbons, it is preferred that the terephthalic acid component be contained in amounts of 50-100 mol % in the dicarboxylic acid components. The other dicarboxylic acid components are accordingly contained in amounts of 50-0 mol % in the dicarboxylic acid components, and they may be any one of the second aromatic dicarboxylic acid components, aliphatic dicarboxylic acid components or a mixture of these.

In more detail, when the aliphatic diamine component is composed of short linear carbon chains of 4-7 carbons, it is preferred that the terephthalic acid component be contained in amounts of 50-85 mole %, preferably of 60-85 mol %, in the dicarboxylic acid components. The other dicarboxylic acid components are accordingly contained in amounts of 50-15 mole %, preferably of 40-15 mol %, in the dicarboxylic acid components, and they may be any one of the second aromatic dicarboxylic acid components, aliphatic dicarboxylic acid components or a mixture of these.

When the aliphatic diamine component is composed of an intermittent length of carbon chains of 6-11 carbons, preferably of 6-10 carbons, it is preferred that the terephthalic acid component be contained in amounts of 50-100 mol %, preferably of 65-100 mol %, in the dicarboxylic acid components. The other dicarboxylic acid components may be any one of the second aromatic dicarboxylic acid components, aliphatic dicarboxylic acid components or a mixture of these, and are contained in amounts of 50-0 mol %, preferably of 35-0 mol %, in the dicarboxylic acid components.

On the other hand, when the aliphatic diamine component is composed of a relatively long carbon chains of 10-18 carbons, then it is preferred that the terephthalic acid component be contained in amounts of 75-100 mol % in the dicarboxylic acid components. The other dicarboxylic acid components may be any one of the second aromatic dicarboxylic acid components, aliphatic dicarboxylic acid components or a mixture of these, and are contained in amounts of 25-0 mol % in the dicarboxylic acid components.

As above set forth, when the amounts of the terephthalic acid components, the other aromatic dicarboxylic acid components and aliphatic dicarboxylic acid components in the dicarboxylic acid component are specified in accordance with the number of carbons in the aliphatic diamine components, the resultant resin composition is of high moldability, but also molded articles therewith have high heat resistance, and hence high resistance to heat degradation and high thermal deflection temperature, and are excellent in mechanical properties such as flexural strength or wear resistance.

The diamine components may contain aromatic diamine components in addition to the alkylenediamine components. There may be mentioned as such aromatic diamine components, for example, m-xylylenediamine or p-xylylenediamine components.

However, it is most preferred that the aromatic polyamide resins are composed of (a) terephthalic acid components and the second aromatic dicarboxylic acid components in amounts of 60-100 mol %, and (b) linear alkylenediamine components of 6-18 carbons in amounts of 40-0 mol % while the amount of the terephthalic acid components in the aromatic dicarboxylic acid components is more specifically defined by the number of carbons of the linear alkylenediamine components as above described.

The aromatic polyamide resin used in the composition of the invention have an intrinsic viscosity [$\eta$] usually of not less than 0.5 dl/g, preferably not less than 0.6 dl/g, most preferably in the range of 0.7-3.0 dl/g, as measured in concentrated sulfuric acid at a temperature of 30 °C.

The above mentioned aromatic polyamide resins may be produced by condensation polymerization in solution of dicarboxylic acid dihalides and aliphatic diamines corresponding to the dicarboxylic acid and diamine components, respectively, as described hereinbefore, as already known, for example, in P. W. Morgan, Polymer Reviews, 10, Condensation Polymers by Interfacial and Solution Methods, Interscience Publishers (1965) or Makromol. Chem., 47, 93-113 (1961). A known interfacial method also provides the above polyamide resins.

The aromatic polyamide resins may also be produced by melt polymerization methods, wherein aromatic dicarboxylic acids ans diamines or their polyamide salts corresponding to the aromatic dicarboxylic acid components and diamine components, respectively, are polycondensed together in the presence or absence of solvents such as water. As a further method, oligomers are first produced by, for example, solution methods, and then the oligomers are polycondensed in solid phase.

The $\alpha$-olefin copolymer used in the invention is composed of an $\alpha$-olefin component and an $\alpha,\beta$-unsaturated carboxylic acid glycidyl ester component. The copolymer provides the resultant resin composition with excellent mechanical properties, in particular, such as impact strength and flexural strength as well as high heat resistance such as thermal deflection temperature.

The $\alpha$-olefin component in the $\alpha$-olefin copolymer usedmay be $\alpha$-olefin of 2-6 carbons, preferably of 2-4 carbons, and may be exemplified by ethylene, propylene, 1-butene, 1-pentene or 1-hexene components,

with ethylene components most preferred.

The α,β-unsaturated carboxylic acid glycidyl ester components used may be exemplified by a component derived from the compound represented by the general formula of

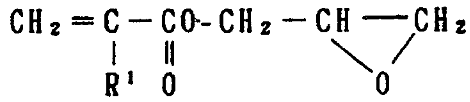

wherein $R^1$ represents hydrogen or lower alkyl group preferably of 1-4 carbons. There may be mentioned as such compounds as represented by the formula, for example, glycidyl acrylate, glycidyl methacrylate or glycidyl ethacrylate, and glycidyl methacrylate is preferred.

The α-olefin copolymer contains the α,β-unsaturated carboxylic acid glycidyl ester components in amounts of 1-30 % by weight, preferably in amounts of 3-20 % by weight, most preferably of 5-15 % by weight, based on the copolymer. When the α-olefin copolymer contains the α,β-unsaturated carboxylic acid glycidyl ester components in amounts of more than 30 % by weight based on the copolymer, the copolymer is apt to thermally decompose so that the resultant resin compositions deteriorate in mechanical properties.

When the α-olefin copolymer contains the α,β-unsaturated carboxylic acid glycidyl ester components in amounts of not more than 20 % by weight, the copolymer may contain unsaturated monomer components therein which are copolymerizable with the α-olefin component and α,β-unsaturated carboxylic acid glycidyl ester component used. The unsaturated monomer components usable in the invention include, for example, vinyl ethers such as vinyl ethyl ether, vinyl esters such as vinyl acetate or vinyl propionate, alkyl acrylates such as methyl acrylate, ethyl acrylate or propyl acrylate, alkyl methacrylates such as methyl methacrylate, ethyl methacrylate or propyl methacrylate, vinyl cyanides such as acrylonitrile, aromatic vinyl compounds such as styrene or methylstyrene. Carbon monoxide may be likewise used as monomers.

The α-olefin copolymer used has an intrinsic viscosity [η] of 0.5-2.5 dl/g, preferably of 0.8-2.0 dl/g, as measured at 135°C in decalin. When the copolymer has an intrinsic viscosity of less than 0.5 dl/g, the resultant resin composition has insufficient mechanical properties, in particular, impact strength, whereas when the copolymer has an intrinsic viscosity of more than 2.5 dl/g, the resultant resin composition has an insufficient fluidity when being melt-blended with the aromatic polyamide resins.

The polyamide resin composition of the invention contains the α-olefin copolymer in amounts of 0.5-50 parts by weight, preferably in amounts of 1.0-40 parts by weight, most preferably of 5-35 parts by weight, in relation to 100 parts by weight of the aromatic polyamide resins. When the amount of the α-olefin copolymer in the polyamide resin composition is less than 0.5 parts by weight in relation to 100 parts by weight of the aromatic polyamide resins, the resultant polyamide resin compositions are of insufficient impact strength, whereas when the amount is more than 50 parts by weight in relation to 100 parts by weight of the aromatic polyamide resin, the resultant polyamide resin compositions are of insufficient mechanical properties such as tensile strength, flexural strength or flexural modulus, as well as heat resistance.

The polyamide resin composition of the invention may further contain a polyarylate in amounts of 10-200 parts by weight, preferably 20-150 parts by weight, in relation to 100 parts by weight of the aromatic polyamide resins.

The polyarylate used in the invention contain main and essential repeating units represented by the general formula of

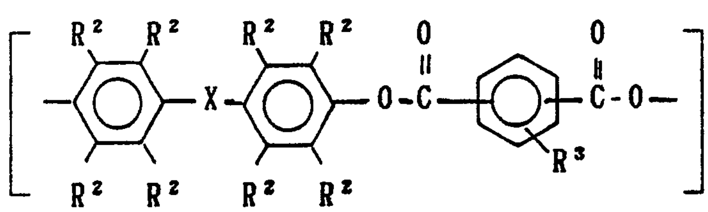

wherein X represents O, S. $SO_2$, CO or alkylene groups preferably of 1-4 carbons, $R^2$ independently represents hydrogen, halogen atom or alkyl preferably of 1-4 carbons, $R^2$ represents one or more alkyls preferably of 1-4 carbons, and wherein the phenylene prefebly being p-phenylene, m-phenylene or mixtures of these.

The polyarylates used may be produced by the reaction of bisphenols and aromatic dicarboxylic acids such as terephthalic acid or isophthalic acid, or their derivatives such as dihalides, preferably dichlorides, or diesters, preferably dialkyl esters, by conventional interfacial polymerization method, solution polymerization method or melt polymerization method. The aromatic dicarboxylic acids or their derivatives used may be substituted with one or more inactive groups such as alkyls.

The bisphenols used include, for example, 4,4′- dihydroxydiphenyl ether, bis(4-hydroxy-2-methylphenyl) ether, bis(4-hydroxyphenyl) sulfide, bis(4-hydroxyphenyl) sulfone, bis(4-hydroxyphenyl) ketone, bis(4-hydroxyphenyl)methane, bis(4-hydroxy-3-methylphenyl)methane, 1,1-bis(4-hydroxyphenyl)ethane, 2,2-bis(4-hydroxy-3-methylphenyl)propane, 1,1-bis(4-hydroxyphenyl)-n-butane, bis(4-hydroxyphenyl)phenylmethane, bis(4-hydroxyphenyl)diphenylmethane, bis(4-hydroxyphenyl)-4′-methylphenylmethane, 1,1-bis(4-hydroxyphenyl)cyclohexane, 1,1-bis(4-hydroxyphenyl)cyclohexylmethane or 2,2-bis(4-hydroxynaphthyl)propane. These bisphenols may be used singly or as a mixture of two or more. Further, the bisphenols may be used together with the other aromatic dihydroxy compounds such as 2,2′-dihydroxydiphenyl, 2,6-dihydroxynaphthalene, hydroquinone, resorcinol, 2,6-dihydroxytoluene or 3,6-dihydroxytoluene. However, usually 2,2-bis(4-hydroxy-3-methylphenyl)propane or bisphenol A is preferred.

The aromatic polyamide resin compositions of the invention are excellent in mechanical properties such as impact strength, heat resistance such as thermal deflection temperatures, physicochemical properties such as resistance to water or chemicals, and moldability such as fluidity.

The polyamide resin compositions of the invention may further contain fillers, inorganic or organic, antioxidants, ultraviolet ray absorbers, light stabilizers, heat stabilizers, phosphite stabilizers, peroxide decomposing agents, basic assintants, nuclei increasing agents, plasticizers, lubricants, antistatic agents, fire retardants, mold releasing agents, pigments or dyes.

The fillers may be in a variety of forms, such as powders, granulates, platelets, fibers, strands, cloths or mats. More specifically, there may be used, for example, inorganic powders, granulates or platelets such as of silica, alumina, silica-alumina, talc, diatomaceous earth, clay, kaolin, quartz, glass, mica, graphite, molybdenum disulfide, plaster, ferric oxide, titanium dioxide, zinc oxide, calcium carbonate, mercurized magnesium, hydrotalcite, aluminum, copper or stainless steel, inorganic fibers such as glass fibers, carbon fibers, boron fibers, ceramic fibers, asbestos fibers or stainless steel fibers, or their secondary products such as cloths, or powders, granulates or platelets of polymer materials of, for example, totally aromatic polyamides such as poly-p-phenyleneterephthalamide, poly-m-phenyleneterephthalamide, poly-m-phenyleneisophthalamide, condensation products of diaminodiphenyl ether and terephthalic or isophthalic acid, or condensation productsof p- or m-aminobenzoic acid, totally aromatic polyamideimide or aromatic polyimide such as condensation products of diaminodiphenyl ether and trimellitic or pyromellitic anhydride, heteroaromatic polymers such as polybenzimidazole or polyimidazophenanthroline, fluorinated polymers such as polytetrafluoloethylene, or their secondary products such as cloths. These fillers may be sused singly or in combination, and may be in advance treated with silane coupling agents or titanium coupling agents.

In particular, the use of powder fillers such as of silica, silica-alumina, alumina, titanim dioxide, graphite, molybdenum disulfide or polytetrafluoloethylene is preferred since such fillers provide molded articles of the resultant resin composition with improved wear resistance, and thus the molded articles have small coefficients of dynamic friction, Taber abrasion and large marginal pigment volume concentrations.

The powder fillers preferably used have an average particle size usually of 0.1 mμ to 200 μm, preferably of 1 mμ to 100 μm.

The powder fillers may be contained usually in amounts of not more than 200 parts by weight, preferably of not more than 100 parts by weight, most preferably in amounts of 0.5-50 parts by weight, in relation to 100 parts by weight of the aromatic polyamide resins.

The use of the organic fiber fillers, in particular, totally aromatic polyamide fibers such as of poly-p-phenyleneterephthalamide, poly-m-phenyleneterephthalamide, poly-m-phenyleneisophthalamide, condensation products of diaminodiphenyl ether and terephthalic or isophthalic acid, improves mechanical properties such as tensile strength or Izod impact strength as well as heat resiatance of molded articles of the resultant resin compositions

In turn, the use of the inorganic fiber fillers, in particular, glass fibers, carbon fibers or boron fibers improves mechanical properties such as tensile strength, flexural strength or flexural modulus, heat resistance properties such as thermal deflection temperature and physicochemical properties such as water resistance of molded articles of the resin compositions.

The inorganic or organic fiber fillers used have an average length of 0.1-20 mm, preferably of 1-10 mm, so that the resultant resin compositions are of high moldability but also molded articles produced therefrom have excellent mechanical and thermal properties. The inorganic or organic fiber fillers may be contained in

amounts usually of not more than 200 parts by weight, preferably in the range of 5-180 parts by weight, most preferably in the range of 10-150 parts by weight, in relation to 100 parts by weight of the aromatic polyamide resins.

The polyamide resin compositions of the invention may further contain thermoplastic resins such as polyethylene, polypropylene or polyethylene terephthalate.

The polyamide resin compositions of the invention may be produced by any known method. By way of example, they may be produced by admixing together and melting the polymer ingredients as hereinbefore described, and if necessary, adding additives to the melts using, for example, extruders or kneaders. When the polyarylates are used as polymer ingredients, the polyamide resins and the polyarylates may be first mixed together to prepare preliminary resin compositions using, for example, Henschel mixers, ball mills or ribbon blenders, and then the α-olefin copolymers may be mixed therewith. Of course, all the polymer ingredients may be mixed together at the same time using, for instance, single screw extruders, multi-screw extruders, kneaders or Banbury mixers.

The thus produced polyamide resin compositions may be suitably used as high performance engineering plastics, and may be molded to a variety of desired articles by conventional melt molding such as compression, injection or extrusion molding.

The invention will now be described with reference to examples, however, the invention is not limited thereto.

## Polyamide Resin Composition [I]

### Example 1

#### Production of Polyamide Resins

An amount of 291 g (2.5 mol) of 1,6-diaminohexane, 340 g (1.75 mol) of dimethyl terephthalate, 146 g (0.75 mol) of dimethyl isophthalate and 600 ml of deionized water were placed in a two-liter capacity reaction vessel. The mixture was refluxed at 100° C under a nitrogen atmosphere over four hours, and then distilled at 140° C for four hours.

Then, the distillation was continued for six hours while the mixture was heated from 140° C to 350° C , to provide 590 g of a polyamide having an intrinsic vicosity [η] of 0.70 dl/g at 30° C in concentrated sulfuric acid. The polyamide was then further solid-polymerized at 300° C under a reduced pressure of 1 mmHg over ten hours, to provide a polyamide having an intrinsic vicosity [η] of 1.5 dl/g at 30° C in concentrated sulfuric acid. The polyamide was found to contain terephthalic acid component in amounts of 71 mol % and have a melting point of 330° C

#### Production of Polyamide Resin Compositions

An amount of 25 parts by weight of ethylene-glycidyl methacrylate copolymer having an ethylene content of 90 % by weight and a glycidyl methacrylate content of 10 % by weight (Bondfast E by Sumitomo Kagaku Kogyo K.K.) and 100 parts by weight of the polyamide as prepared above were formed into blends in the form of pellets at 350° C with a single screw extruder (L/D = 28, 30mm).

The pellets were hot-pressed under a pressure of 100 Kg/cm$^2$ and at a temperature higher than the melting point of the polyamide by 5-10° C under a nitrogen atmosphere with a press molding machine, and then cold-pressed at 20° C , to provide plates of a thickness of 2-4 mm.

The plates were cut to specimens, and after standing over a period of 96 hours at 23° C under a relative humidity of 65 %, flexural strength, flexural modulus, Izod impact strength and thermal deflection temperature were measured. The first three measurements were made with specimens of 63.5 x 12.7 x 2.0 mm in accordance with ASTM D 790. The thermal deflection temperature was measured with specimens of 127 x 12.7 x 4.0 mm under a load of 18.6 Kg/cm$^2$ in accordance with ASTM D 648.

The results are shown in the Table 1.

Example 2

An amount of 12.5 parts by weight of the ethylene-glycidyl methacrylate copolymer and 100 parts by weight of the polyamide resin were used, and otherwise in the same manner as in the Example 1, specimens were prepared. The results of the measurements with the specimens are shown in the Table 1.

Example 3

Production of Polyamide Resins

An amount of 291 g (2.5 mol) of 1,6-diaminohexane, 291 g (1.5 mol) of dimethyl terephthalate, 174 g (1.0 mol) of dimethyl adipate and 600 ml of deionized water were placed in a two-liter capacity reaction vessel. The mixture was refluxed at 100 °C under a nitrogen atmosphere over four hours, and then distilled at 140 °C for four hours.

Then, the distillation was continued for six hours while the mixture was heated from 140 °C to 350 °C, to provide 569 g of a polyamide having an intrinsic vicosity [$\eta$] of 0.75 dl/g at 30 °C in concentrated sulfuric acid. The polyamide was then further solid-polymerized at 270 °C under a reduced pressure of 1 mmHg over ten hours, to provide a polyamide having an intrinsic vicosity [$\eta$] of 1.6 dl/g at 30 °C in concentrated sulfuric acid. The polyamide was found to contain terephthalic acid component in amounts of 60 mol % and have a melting point of 310 °C.

Production of Polyamide Resin Compositions

An amount of 25 parts by weight of the ethylene-glycidyl methacrylate copolymer and 100 parts by weight of the polyamide resin were used, and otherwise in the same manner as in the Example 1, specimens were prepared. The results of the measurements with the specimens are shown in the Table 1.

Comparative Examples 1-6

An amount of 25 parts by weight of copolymers as shown in the Table 1 were used in place of the ethylene-glycidyl methacrylate copolymer together with 100 parts by weight of the polyamide resin, and otherwise in the same manner as in the Example 1, specimens were prepared. The results of the measurements with the specimens are shown in the Table 1.

TABLE 1

| | α-Olefin Copolymer[1] | | | |
|---|---|---|---|---|
| | Composition | [η] | Comonomer | Content in Compositions (parts by wt.) |
| Example 1 | Et/GMA | 1.02 | GMA (10 % by wt.) | 25 |
| Example 2 | Et/GMA | 1.02 | GMA (10 % by wt.) | 12.5 |
| Example 3 | Et/GMA | 1.02 | GMA (10 % by wt.) | 25 |
| Comparative 1 | Elastomer[2] | .82 | — | 25 |
| Comparative 2 | Et/VAc[3] | 0.83 | VAc (14 % by wt.) | 25 |
| Comparative 3 | Et/EAc[4] | 1.20 | EAc (15.4 % by wt.) | 25 |
| Comparative 4 | Et/MA[5] | 0.83 | MAc (10 % by wt.) | 25 |
| Comparative 5 | Et/MA[6] | — | MA (10 % by wt.) | 25 |
| Comparative 6 | Et/MA[7] | — | MA (10 % by wt.) | 25 |

Notes 1) Et: ethylene, GMA: glycidyl methacrylate, VAc: vinyl acetate, EAc: ethyl acrylate, MA: methacrylic acid.
Contents in compositions are by parts by weight in relation to 100 parts by weight of polyamide resins.
2) Maleic modified ethylene-propylene copolymer
3) EVA® 560 (Mitsui-Dupont Polychemical)
4) EVA® A 710 (Mitsui-Dupont Polychemical)

TABLE 1 (continued)

| | Properties of Compositions | | | |
|---|---|---|---|---|
| | Flexural Strength (Kg/cm²) | Flexural Modulus ($\times 10^3$ Kg/cm²) | Izod Impact Strength (Kg·cm/cm) | Thermal Deflection Temperaure (°C) |
| Example 1 | 800 | 20.4 | 33 | 109 |
| Example 2 | 1060 | 25.0 | 20 | 117 |
| Example 3 | 750 | 19.5 | 28 | 87 |
| Comparative 1 | 560 | 20.8 | 8.9 | 113 |
| Comparative 2 | 110 | — | 0.5 | 75 |
| Comparative 3 | 180 | — | 2.7 | 80 |
| Comparative 4 | 590 | 18.1 | 3.9 | 64 |
| Comparative 5 | 800 | 21.8 | 6.7 | 78 |
| Comparative 6 | 610 | 18.1 | 3.3 | 68 |

Notes 5) Nucrel® ACR-10 (Mitsui-Dupont Polychemical)

6) Zn salts, Hi-milan® H-155 (Mitsui-Dupont Polychemical)

7) Na salts, Hi-milan® H-160 (Mitsui-Dupont Polychemical)

[B] Second Polyamide Resin Compositions

Example 1

Production of Polyamide Resins

An amount of 123.6 g (0.744 mol) of terephthalic acid, 52.9 g (0.318 mol) of isophthalic acid, 123.4 g (1.062 mol) of 1,6-diaminohexane and 74 ml of deionized water were placed in a one-liter capacity autoclave. The mixture was heated to 250 °C under stirring in two hours, and maintained at the temperature for one hour to carry out the polymerization.

After the reaction, the reaction mixture was taken out of the autoclave, and then dried overnight at 100 °C and 100 mmHg under a nitrogen atmosphere, to provide initial low condensates which were found to have an intrinsic viscosity [$\eta$] of 0.1 dl/g at 30 °C in concentrated sulfuric acid.

The initial condensates were melt-polymerized with a twin-screw extruder to provide prepolymers having an intrinsic viscosity [$\eta$] of 0.92 dl/g at 30 °C in concentrated sulfuric acid and a melting point of 320 °C.

Production of Polyarylates

A mixture of 50 mol % of terephthalic acid and 50 mol % of isophthalic acid were polycondensated with bisphenol A, to prepare polyarylates which were found to have a logarithmic viscosity of 0.65 as measured at 25 °C in phenol/tetrachloroethane (6/4 in weight ratios).

Production of Polyamide Resin Compositions

An amount of 100 parts by weight of the polyamide was kneaded together with 100 parts by weight of the polyarylate and 22 parts by weight of the same ethylene-glycidyl methacrylate copolymer as before mentioned at 260 °C with a twin-screw extruder, to provide polyamide resin compositions.

The thus obtained polyamide resin compositions were injection-molded at 270 °C to prepare specimens, and their impact strength, thermal deflection temperature and water absorption were measured. The results are shown in the Table 2.

Thermal deflection temperature was measured in the same manner as described hereinbefore, while Izod impact strength was measured in accordance with ASTM D 256. Water absorption was measured by immersing specimens of 3.2 mm in thickness in water at 23 °C for 24 hours, and then the amount of the water contained in the specimens was measured in accordance with ASTM D 570.

Example 2

An amount of 100 parts by weight of the polyamide, 38 parts by weight of the polyarylate and 15 parts by weight of the ethylene-glycidyl methacrylate copolymer were used, and otherwise in the same manner as in the Example 1, specimens were prepared in the same manner as in the Example 1.

Example 3

An amount of 100 parts by weight of the polyamide, 100 parts by weight of the polyarylate and 50 parts by weight of the ethylene-glycidyl methacrylate copolymer were used, and otherwise in the same manner as in the Example 1, specimens were prepared in the same manner as in the Example 1.

Comparative Example 1

An amount of 100 parts by weight of the polyamide and 100 parts by weight of the polyarylate were used, but no ethylene-glycidyl methacrylate copolymer wwas used, and otherwise in the same manner as in the Example 1, specimens were prepared in the same manner as in the Example 1.

Comparative Example 2

An amount of 100 parts by weight of the polyamide and 11 parts by weight of the ethylene-glycidyl methacrylate copolymer were used, but no polyarylates were used, and otherwise in the same manner as in the Example 1, specimens were prepared in the same manner as in the Example 1.

Comparative Example 3

An amount of 100 parts by weight of nylon 6, 100 parts by weight of the polyarylate and 22 parts by weight of the ethylene-glycidyl methacrylate copolymer were used, and otherwise in the same manner as in the Example 1, specimens were prepared in the same manner as in the Example 1.

Comparative Example 4

An amount of 100 parts by weight of the polyamide, 100 parts by weight of the polyarylate and 86 parts by weight of the ethylene-glycidyl methacrylate copolymer were used, and otherwise in the same manner as in the Example 1, specimens were prepared in the same manner as in the Example 1.

The properties of the specimens prepared in the Examples 2 and 3, and Comparative Examples 1-4 were shown in the Table 2.

TABLE 2

| | Compositions (parts by weight) | | |
|---|---|---|---|
| | Polyamide | Polyarylate | α-Olefin Copolymer |
| Example 1 | 100 | 100 | 22 |
| Example 2 | 100 | 38 | 15 |
| Example 3 | 100 | 100 | 50 |
| Comparative 1 | 100 | 100 | – |
| Comparative 2 | 100 | – | 11 |
| Comparative 3 | 100 | 100 | 22 |
| Comparative 4 | 100 | 100 | 86 |

TABLE 2 (continued)

| | Properties of Compositions | | |
|---|---|---|---|
| | Izod Impact Strength ($Kg/cm^2$) | Thermal Deflection Temperaure (°C) | Water Absoption (%) |
| Example 1 | 20 | 155 | 0.4 |
| Example 2 | 20 | 140 | 0.6 |
| Example 3 | 70 | 145 | 0.4 |
| Comparative 1 | 5 | 155 | 0.4 |
| Comparative 2 | 20 | 126 | 0.6 |
| Comparative 3 | 23 | 140 | 1.2 |
| Comparative 4 | 70 | 120 | 0.4 |

## Claims

1. A polyamide resin composition which comprises:

(A) an aromatic polyamide resin comprising (a) a dicarboxylic acid component which comprises an aromatic dicarboxylic acid component and (b) a diamine component comprising at least one of an aliphatic diamine component and an alicyclic diamine component;

(B) an olefin copolymer in amounts of 0.5-50 parts by weight in relation to 100 parts by weight of the aromatic polyamide resin, the olefin copolymer comprising an α-olefin component and an α,β-unsaturated carboxylic acid glycidyl ester component in amounts of 1-30 % by weight based on the copolymer.

2. The polyamide resin composition as claimed in claim 1, wherein the aromatic polyamide resin comprises:

(a) a dicarboxylic acid component which comprises a terephthalicacid component in amounts of 40-100 mol % and at least one of an aromatic dicarboxylic acid component other than the terephthalic acid component and an aliphatic dicarboxylic acid component of 4-25 carbons in amounts of 60-0 mol %, and

(b) a diamine component comprising at least one of an aliphatic diamine component and an alicyclic diamine component.

3. The polyamide resin composition as claimed in claim 1, wherein the aromatic polyamide resin comprises:

(a) an aromatic dicarboxylic acid component which is composed of terephthalic acid component in amounts of 60-100 mol % and a second aromatic dicarboxylic acid in amounts of 0-40 mol %; and

(b) an aliphatic diamine component.

4. The polyamide resin composition as claimed in claim 2, wherein the dicarboxylic acid component contains the terephthalic acid component in amounts of 50-85 mole %, and the other dicarboxylic acid components in amounts of 50-15 mole %, and wherein the diamine component is composed of aliphatic diamine components of 4-7 carbons.

5. The polyamide resin composition as claimed in claim 2, wherein the dicarboxylic acid component contains the terephthalic acid component in amounts of 50-100 mole %, and the other dicarboxylic acid components in amounts of 50-0 mole %, and wherein the diamine component is composed of aliphatic diamine components of 6-11 carbons.

6. The polyamide resin composition as claimed in claim 2, wherein the dicarboxylic acid component contains the terephthalic acid component in amounts of 50-100 mole % and aliphatic acid components in amounts of 50-0 mole %, and wherein the diamine component is composed of aliphatic diamine components of 4-11 carbons.

7. The polyamide resin composition as claimed in claim 6, wherein the aliphatic acid component is adipic acid component.

8. The polyamide resin composition as claimed in claim 2, wherein the dicarboxylic acid component contains the terephthalic acid component in amounts of 75-100 mole %, and the other dicarboxylic acid components in amounts of 25-0 mole %, and wherein the diamine component is composed of aliphatic diamine components of 10-18 carbons.

9. The polyamide resin composition as claimed in claim 1, wherein the polyamide resin has an intrinsic viscosity [η] of 0.5-3.0 dl/g as measured at 30 °C in concentrated sulfuric acid.

10. The polyamide resin composition as claimed in claim 1, wherein the olefin copolymer has an intrinsic viscosity [η] of 0.5-2.5 dl/g as measured at 135 °C in decalin.

11. The polyamide resin composition as claimed in claim 1, wherein the α-olefin copolymer contains the α,β-unsaturated carboxylic acid glycidyl ester components in amounts of 1-30 % by weight based on the copolymer.

12. The polyamide resin composition as claimed in claim 11, wherein the α,β-unsaturated carboxylic acid glycidyl ester component is represented by the general formula of

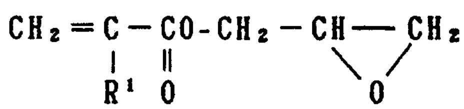

wherein $R^1$ represents a hydrogen or a lower alkyl group.

13. The polyamide resin composition as claimed in claim 12, wherein the α,β-unsaturated carboxylic acid glycidyl ester component is glycidyl acrylate, glycidyl methacrylate or glycidyl ethacrylate.

14. The polyamide resin composition as claimed in claim 1, which further contains a polyarylate in amounts of 10-200 parts by weight in relation to 100 parts by weight of the polyamide resins.

15. The polyamide resin composition as claimed in claim 14, wherein the polyarylate contains main and essential repeating units therein represented by the general formula of

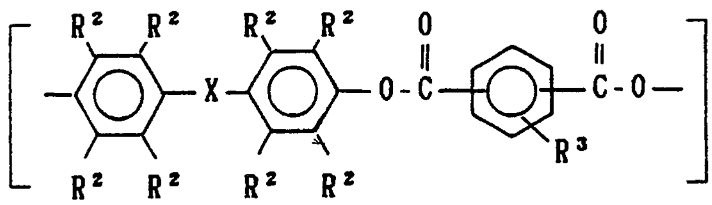

wherein X represents O, S. $SO_2$, CO or alkylene groups, $R^2$ independently represents hydrogen, halogen atom or alkyl, and $R^3$ represents one or more alkyls.

16. The polyamide resin composition as claimed in claim 14, wherein the polyarylate is polymerization products of bisphenols and aromatic dicarboxylic acids or their derivatives.

17. The polyamide resin composition as claimed in claim 16, wherein the aromatic dicarboxylic acids are at least one of terephthalic acid and isophthalic acid.

18. The polyamide resin composition as claimed in claim 16, wherein the aromatic dicarboxylic acid derivatives are at least one of dihalides or dialkyl esteres of terephthalic acid and isophthalic acid.

European Patent Office

# EUROPEAN SEARCH REPORT

Application Number

EP 89 12 0699

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vo. 11, no. 3 (C-395)[2450], 7th January 1987, page 136 C 395; & JP-A-61 183 353 (UNITIKA LTD.) 16-08-1986<br>* Abstract *<br>--- | 1,10-18 | C 08 L 77/00<br>C 08 L 67/02 //<br>(C 08 L 77/00<br>C 08 L 23:00<br>C 08 L 67:02 )<br>(C 08 L 67/02<br>C 08 L 23:00<br>C 08 L 77:00 ) |
| X | PATENT ABSTRACTS OF JAPAN, vol. 11, no. 150 (C-422)[2597], 15th May 1987, page 61 C 422; & JP-A-61 283 653 (SUMITOMO CHEM. CO. LTD) 13-12-1986<br>* Abstract *<br>--- | 1-13 | |
| A | PATENT ABSTRACTS OF JAPAN, vol. 9, no. 306 (C-317)[2029], 3rd December 1985, page 105 C 317; JP-A-60 144 362 (MITSUI SEKIYU KAGAKU KOGYO K.K.) 30-07-1985<br>* Abstract *<br>----- | 1-13 | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 06-02-1990 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document